# EUROPEAN PATENT SPECIFICATION

(11) **EP 2 854 416 B1**
(45) Date of publication and mention of the grant of the patent: **08.05.2019**
(21) Application number: 13793924.5
(22) Date of filing: 07.02.2013
(51) Int. Cl.: H04Q 9/00, G06F 11/16

(54) **MONITOR AND CONTROL SYSTEM**
ÜBERWACHUNGS- UND STEUERUNGSSYSTEM
SYSTÈME DE SURVEILLANCE ET DE COMMANDE

(30) Priority: 22.05.2012 JP 2012116134
(43) Date of publication of application: 01.04.2015
(73) Proprietor: Mitsubishi Electric Corporation, Tokyo 100-8310 (JP)
(72) Inventor: MIYAUCHI, Toshihiko, Tokyo 100-8310 (JP)
(74) Representative: Sajda, Wolf E.
(86) International application number: PCT/JP2013/052811
(87) International publication number: WO 2013/175811

(56) References cited:
- EP-A1- 1 259 033
- WO-A1-02/45354
- JP-A- H01 200 897
- JP-A- H01 200 897
- JP-A- 2004 080 322
- US-A- 6 145 098

## Description

### Technical Field

The invention relates to a monitor and control system, which monitors a state of a load and controls the load by collecting state information on the load such as a motor in the field to be controlled and monitored by a transmission master station provided in a first room such as a monitor and control room, a transmission slave station provided in a second room such as an electric room and a transmission slave station provided in a control panel such as a control panel in the field provided in the vicinity of the load to be controlled and monitored.

### Background Art

In a conventional monitor and control system, which monitors an operating state of a load and controls the load by collecting operating state information on the load such as a motor in the field by a transmission master station provided in a first room such as a monitor and control room (hereinafter referred to as a "monitor and control room"), a transmission slave station provided in a second room such as an electric room (hereinafter referred to as an "electric room") and a slave station provided in a control panel provided in the vicinity of the load to be controlled and monitored, a dual transmission system configuration is used, which can perform an ON/OFF control operation over the load from all positions of the monitor and control room, the electric room and the control panel, and can confirm the state monitoring (ON/OFF state, load current measurement and the like) of the load in all positions. In the dual transmission system, one is the main system, and another is a standby system, and the main system has a control command right (e.g., see Patent Literature 1, Patent Literature 2).

Patent Literature 3 discloses a remote control system for ensuring communications to allow a controller in a remote area to control a targeted apparatus via an intermediate line. The remote control system comprises the controller electrically connected to a local communicating apparatus via local transmission lines. The controller is electrically connected to a remote communicating apparatus via remote transmission lines, and the targeted apparatus is connected to a local communicating unit via the local transmission lines.

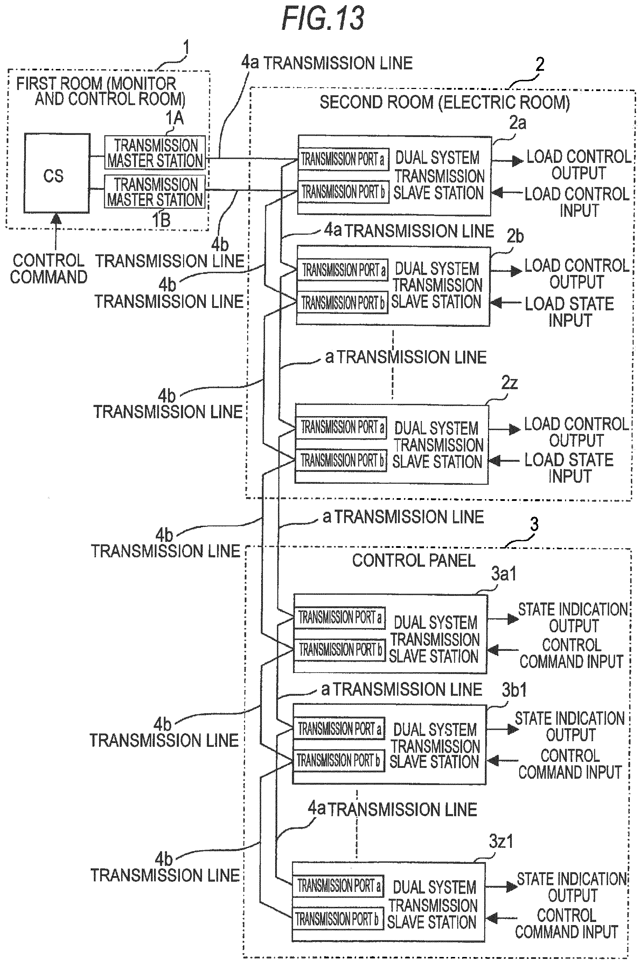

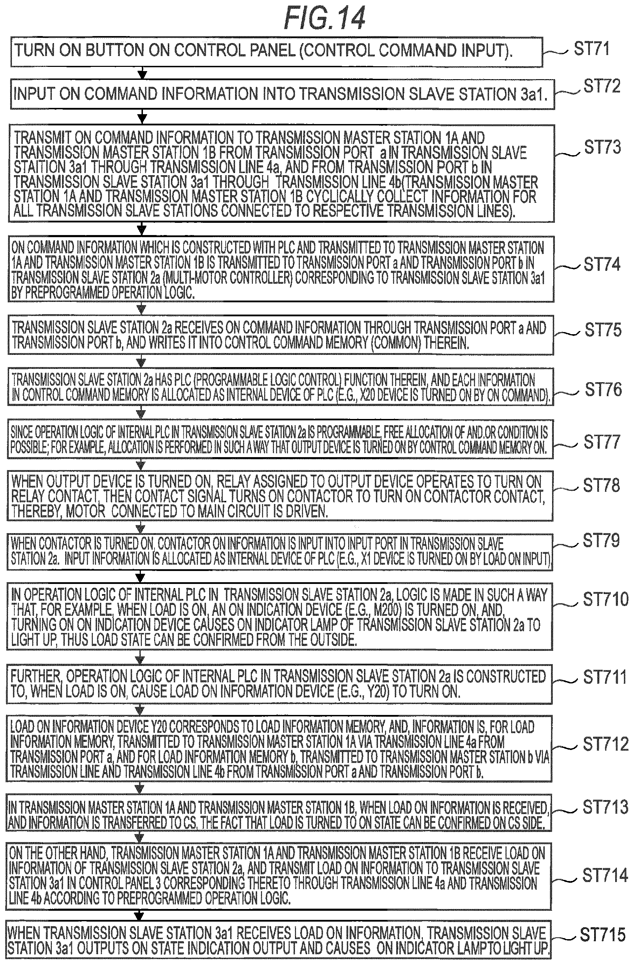

A detailed example of the conventional monitor and control system is shown in FIGS. 13 and 14.

As shown in FIGS. 13 and 14, for example, when a transmission master station 1A in a monitor and control room 1 controls a load such as a motor in an electric room 2 to be controlled and monitored from an OFF state to an ON state, the transmission master station 1A transmits an ON control command to a transmission slave station 2a in the electric room 2, and the transmission slave station 2a exerts ON control over the load.

Further, the transmission master station 1A takes up an ON/OFF state that is input into the transmission slave station 2a via a transmission line to constantly monitor the ON/OFF state of the load. Furthermore, since the ON/OFF state which is taken up is necessary to be transferred as information to a transmission slave station 3a1 placed in a control panel 3, the ON/OFF state is transmitted to the transmission slave station 3a1 from the transmission master station 1A.

Moreover, the transmission slave station 3a1 exerts control over a load operating state indicator lamp based on the received ON/OFF state, and causes the load operating state indicator lamp to light up according to the load state.

In addition, the ON/OFF control operation from the control panel 3 is transmitted to the transmission master station 1A through a transmission line from the transmission slave station 3a1, the transmission master station 1A transmits an ON/OFF control command to the transmission slave station 2a in the electric room 2, and the transmission slave station 2a controls the load. If the load state changes, as described above, an ON/OFF state is transmitted to the transmission master station 1A and the transmission slave station 3a1.

If an abnormality occurs in the transmission master station 1A, a control system CS detects the abnormality in the transmission master station, and the control command right is transferred to a transmission master station 1B.

In an abnormality in the transmission system, because it is a dual system, even if an abnormality occurs in one master station, the operation control can be continued.

The details of the operation by the ON/OFF control operation from the control panel 3 in FIG. 13 will be described with reference to FIG. 14.

Step ST71: Turn ON the ON/OFF operation button on the control panel 3 (control command input).

Step ST72: Input ON command information into the transmission slave station 3a1.

Step ST73: Transmit the ON command information to the transmission master station 1A and the transmission master station 1B from a transmission port **a** through a transmission line 4a, and a transmission port **b** through a transmission line 4b in the transmission slave station 3a1 (the transmission master station 1A and the transmission master station 1B cyclically collect information for all transmission slave stations connected to respective transmission lines).

Step ST74: The ON command information which is constructed with a PLC and transmitted to the transmission master station 1A and the transmission master station 1B is transmitted to the transmission port **a** and the transmission port **b** in the transmission slave station 2a (multi-motor controller) corresponding to the transmission slave station 3a1 by a preprogrammed operation logic.

Step ST75: The transmission slave station 2a receives the ON command information through the transmission port **a** and the transmission port **b,** and writes it into the control command memory (common) therein.

Step ST76: The transmission slave station 2a has a PLC (programmable logic control) function therein, and each information in the control command memory is allocated as an internal device of the PLC (e.g., an X20 device is turned on by an ON command).

Step ST77: Since the operation logic of the internal PLC in the transmission slave station 2a is programmable, the free allocation of an AND.OR condition is possible; for example, allocation is performed in such a way that an output device is turned on by the control command memory ON.

Step ST78: When the output device is turned on, a relay assigned to the output device operates to turn on a relay contact, then the contact signal turns on a contactor to turn on the contactor contact, thereby, a motor (load) connected to a main circuit is driven.

Step ST79: When the contactor is turned on, the contactor ON information is input into an input port in the transmission slave station 2a. The input information is allocated as an internal device of the PLC (e.g., an X1 device is turned on by the load ON input).

Step ST710: In the operation logic of the internal PLC in the transmission slave station 2a, a logic is made in such a way that, for example, when the load is ON, an ON indication device (e.g., M200) is turned on, and, turning on the ON indication device causes the ON indicator lamp of the transmission slave station 2a to light up, thus the load state can be confirmed from the outside.

Step ST711: Further, the operation logic of the internal PLC in the transmission slave station 2a is constructed to, when the load is ON, cause a load ON information device (e.g., Y20) to turn on.

Step ST712: The load ON information device Y20 corresponds to the load information memory, and, the information is, for the load information memory, transmitted to the transmission master station 1A via the transmission line 4a from the transmission port **a,** and for the load information memory b, transmitted to the transmission master station **b** via the transmission line and transmission line 4b from the transmission port **a** and the transmission port **b.**

Step ST713: In the transmission master station 1A and the transmission master station 1B, when the load ON information is received, and the information is transferred to the CS, the fact that the load is turned to an ON state can be confirmed on the CS side.

Step ST714: On the other hand, the transmission master station 1A and the transmission master station 1B receive the load ON information of the transmission slave station 2a, and transmit the load ON information to the transmission slave station 3a1 in the control panel 3 corresponding thereto through the transmission line 4a and transmission line 4b according to a preprogrammed operation logic.

Step ST715: When the transmission slave station 3a1 receives the load ON information, the transmission slave station 3a1 outputs an ON state indication output and causes the ON indicator lamp to light up.
Patent Literature 1 JP-A-2002-344 642 (FIG. 1 and explanation thereof)
Patent Literature 2 JP-B-63-047 036 (FIG. 1 and explanation thereof)
Patent Literature 3 EP 1 259 033 A1

### Disclosure of the Invention

### Technical Problem

A control system CS that performs monitoring and controlling in a first room such as a monitor and control room is required to be maintained regularly, during which the transmission master stations 1A and 1B come to a complete stop, and a control operation over a load and a state indication from the control panel 3 become disabled. For example, in a water processing system and the like, even in periodical maintenance, the fact that the entire control in the field becomes disabled during the maintenance period is not desirable, which is a problem.

Moreover, in all of the transmission master stations and transmission slave stations, a slave station of a dual transmission specification is required to be used, which presents a demerit that a system construction expense is expensive.

The present invention was made in the light of the circumstances as described above, and it is an object of the present invention to, even if a transmission master station in a first room stops, allow for a control operation over a load and a state indication from a control panel during the period.

### Solution to the Problem

A monitor and control system according to the present invention, which is adapted to monitor a state of a load by collecting state information on the load by a first transmission master station provided in a first room, a first transmission slave station provided in a second room and a second transmission slave station
provided in a control panel provided in the vicinity of the load to be controlled and monitored, and said monitor and control system, being adapted to control the load by the first transmission master station through the first transmission slave station, and controls the load by the control panel through the first transmission slave station via the second
transmission slave station, includes a second transmission master station in the control panel or the second room, wherein the first transmission master station and the second transmission master station are adapted to independently issue a control command to the first transmission slave station in the second room to control the load, and the first transmission master station and the second transmission master station collect state monitoring information on the load, wherein a third transmission slave station is provided in the control panel, and the second transmission master station is adapted to transmit the fact that transmission to the first transmission slave station in the second room becomes disabled to the first transmission master station through the third transmission slave station.

### Advantageous Effects of the Invention

Since a monitor and control system according to the present invention, which is adapted to monitor a state of a load by collecting state information on the load by a first transmission master station provided in a first room, a first transmission slave station provided in a second room and a second transmission slave station provided in a control panel provided in the vicinity of the load to be controlled and monitored, is adapted to control the load by the first transmission master station through the first transmission slave station, and to control the load by the control panel through the first transmission slave station via the second transmission slave station, includes a second transmission master station in the control panel or the second room, wherein the first transmission master station and the second transmission master station are adapted to independently issue a control command to the first transmission slave station in the second room to control the load, and collect state monitoring information on the load, the invention has an effect to, even if the first transmission master station in the first room stops, allow for a control operation over the load and a state indication of the load from the control panel during the stop period.

### Brief Description of the Drawings

- FIG. 1: is a diagram showing a first embodiment of the present invention, and illustrating a system configuration of the entire monitor and control system.
- FIG. 2: is a diagram showing the first embodiment of the present invention, and illustrating the outline of a control panel in FIG. 1.
- FIG. 3: is a diagram showing the first embodiment of the present invention, and illustrating the outline of a drive circuit of a load such as a motor.
- FIG. 4: is a diagram showing the first embodiment of the present invention, and an operation explanatory diagram illustrating, with a flow chart, a load control operation from the control panel in FIG. 1.
- FIG. 5: is a diagram showing a second embodiment of the present invention, and illustrating another example of a system configuration of the entire monitor and control system.
- FIG. 6: is a diagram showing the second embodiment of the present invention, and an operation explanatory diagram illustrating, with a flow chart, a load control operation from the control panel in FIG. 5.
- FIG. 7: is a diagram showing a third embodiment of the present invention, and illustrating yet another example of a system configuration of the entire monitor and control system.
- FIG. 8: is a diagram showing the third embodiment of the present invention, and an operation explanatory diagram illustrating, with a flow chart, a load control operation from the control panel in FIG. 7.
- FIG. 9: is a diagram showing a fourth embodiment of the present invention, and illustrating yet another example of a system configuration of the entire monitor and control system.
- FIG. 10: is a diagram showing the fourth embodiment of the present invention, and an operation explanatory diagram illustrating, with a flow chart, a load control operation from the control panel in FIG. 9.
- FIG. 11: is a diagram showing a fifth embodiment of the present invention, and illustrating yet another example of a system configuration of the entire monitor and control system.
- FIG. 12: is a diagram showing a sixth embodiment of the present invention, and illustrating yet another example of a system configuration of the entire monitor and control system.
- FIG. 13: is a diagram showing an example of a system configuration of the entire conventional monitor and control system.
- FIG. 14: is an operation explanatory diagram illustrating, with a flow chart, a load control operation from the control panel in the conventional monitor and control system shown in FIG. 13.

### Description of Embodiments

### First Embodiment

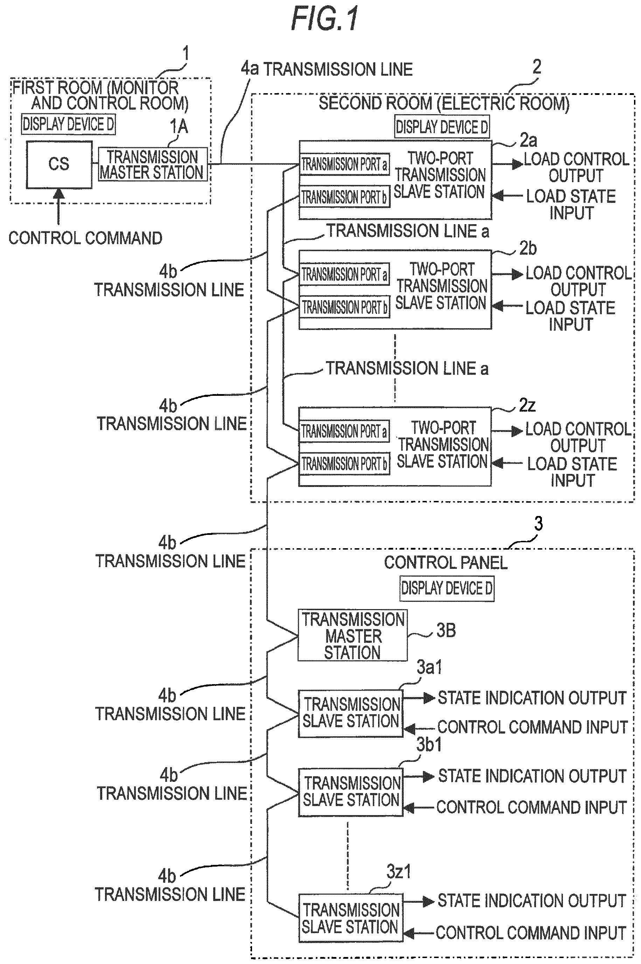

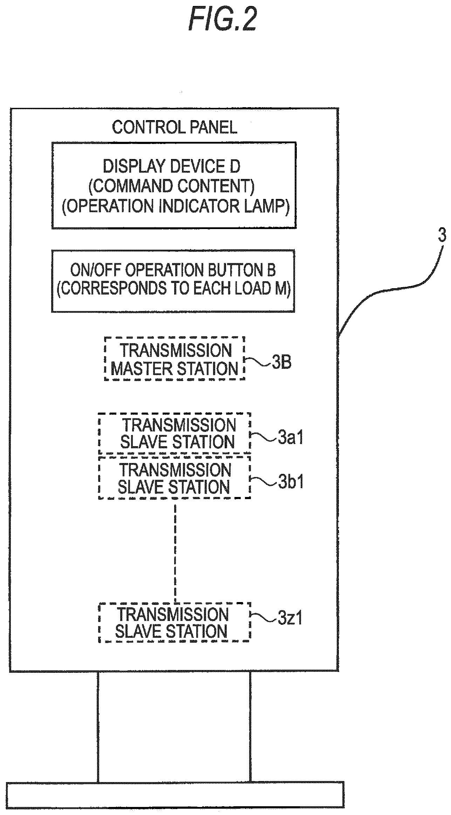

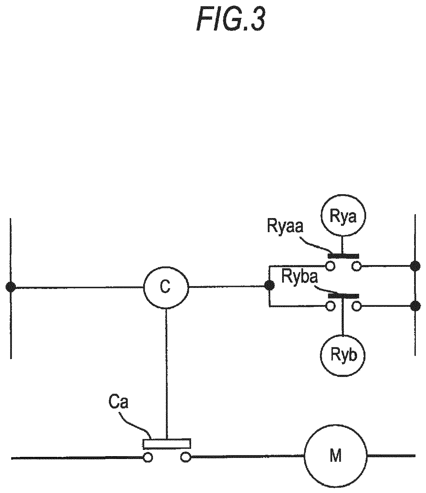

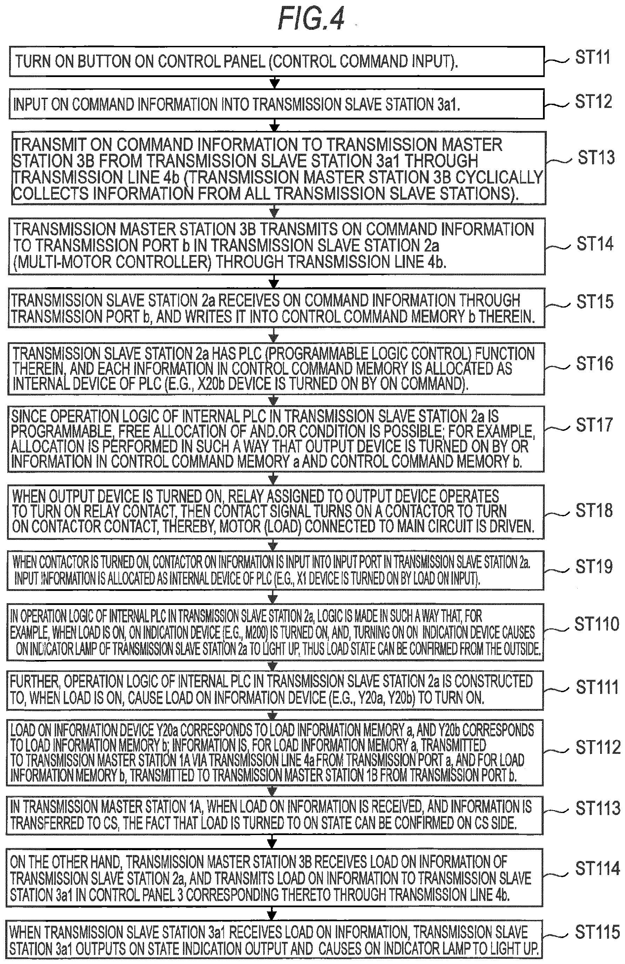

Hereinafter, a first embodiment of the present invention will be described with reference to FIGS. 1 to 4. FIG. 1 is a diagram illustrating a system configuration of the entire monitor and control system, FIG. 2 is a diagram illustrating the outline of a control panel in FIG. 1, FIG. 3 is a diagram illustrating the outline of a drive circuit of a load such as a motor, and FIG. 4 is an operation explanatory diagram illustrating, with a flow chart, a load control operation from the control panel in FIG. 1.

In FIG. 1, a control system CS and a transmission master station 1A are provided in a first room such as a monitor and control room (hereinafter referred to as a "monitor and control room"), a plurality of transmission slave stations 2a, 2b, ... 2z corresponding to each load device M (hereinafter referred to as a "load") such as a motor to be controlled, as shown in FIG. 3, for example, are provided in a control panel (e.g., a control center) placed in a second room such as an electric room (hereinafter referred to as an "electric room") 2, and each of the transmission slave stations 2a, 2b, ... 2z includes two transmission ports a and b so as to be able to connect to a two-line transmission system.

The transmission master station 1A and each transmission port a in the transmission slave stations 2a, 2b, ... 2z are connected to one another through a transmission line 4a. Each of the transmission slave stations 2a, 2b, ... 2z includes two input/output parts (load control output and load state input) to collect the control output and state information for the load to be controlled.

Further, a plurality of transmission slave stations 3a1, 3b1, ... 3z1 corresponding to each load to be controlled are provided in the control panel 3 such as a control panel in the field including a switch with which the load is operated and a display device which displays the state of the load, in order to send a signal for load control operation (ON, OFF) performed on the control panel 3, and receive a load state signal (such as a current value).

The transmission slave stations 3a1, 3b1, ... 3z1 and the respective transmission ports b in the two-port transmission slave stations 2a, 2b, ... 2z are connected to one another by a transmission line 4b.

Further, a transmission master station 3B is connected to the transmission line 4b to control the transmission between the transmission slave stations 3a1, 3b1, ... 3z1 or the transmission slave stations 2a, 2b, ... 2z connected to the transmission line 4b.

Note that the transmission master station 3B is usually placed in the control panel 3, but without limited thereto, the transmission master station 3B may be placed in the electric room 2, for example.

That is, in the case of FIG. 1, the transmission master station 1A having one transmission port is placed in the monitor and control room 1, a plurality of transmission slave stations 2a, 2b, ... 2z each having two transmission ports (transmission port a and transmission port b) are placed in the electric room 2, and the transmission master station 3B and the transmission slave stations 3a1, 3b1, ... 3z1 each having one transmission port for collecting input/output information are placed in the control panel 3.

The transmission master station 1A in the monitor and control room 1 outputs a control command (ON, OFF) over the load such as a motor to the transmission slave stations 2a, 2b, ... 2z in the electric room 2, and acquires information on the state of each load via the transmission slave stations 2a, 2b, ... 2z in the electric room 2 to monitor the state of each load.

The transmission master station 3B in the control panel 3 collects the control command input to the load for all the transmission slave stations 3a1, 3b1, ... 3z1, for an operation on a load performed on the control panel 3 by an operator, and collects state monitoring information on the load from the transmission slave stations 2a, 2b, ... 2z in the electric room 2 to conduct the state indication output of each load through the transmission slave stations 3a1, 3b1, ... 3z1 in the control panel 3.

In this manner, in the first embodiment, the transmission master station 1A in the monitor and control room 1 and the transmission master station 3B in the control panel 3 independently issue a control command to the transmission slave stations 2a, 2b, ... 2z in the electric room 2, and collect state monitoring information on the load, so that a system architecture is achieved in the circumstances that the state of the master and slaves of the transmission system in the monitor and control room 1 and the electric room 2, and the state of the master and slaves between the control panel and the electric room are independent.

Thus, a system in which the operation is continued can be achieved even in the event that one of transmission systems is abnormal as in the dual system of the conventional monitor and control system, and, even if, during the periodic maintenance of the control system CS, the control system CS and the transmission master station 1A in the monitor and control room 1 stop, which was a problem in the past, the control command to the load and the load state monitoring from the control panel 3 are possible.

In addition, in the first embodiment, a single system may be used for the transmission master station 1A in the monitor and control room 1, not in an expensive dual system specification, and it is not necessary to construct software for switching a dual system for the control system CS.

Further, it is possible to apply an inexpensive single transmission specification to the transmission slave stations 3a1, 3b1, ... 3z1 in the control panel 3, allowing the construction cost of the entire transmission system to be reduced.

FIG. 2 is a diagram illustrating the outline of the control panel 3 in FIG. 1.

As illustrated in FIG. 2, the transmission master station 3B and the transmission slave stations 3a1, 3b1, ... 3z1 are incorporated in the outer housing of the control panel 3, and on the surface of the outer housing, an ON/OFF operation button B for ON/OFF operation corresponding to each load M, and a display device D including a command content indication and a load operation state indicator lamp are provided.

FIG. 3 is a diagram illustrating the outline of a drive circuit of a load such as a motor.

When the load M such as a motor is energized by supplying power to an energizing coil C of a contactor, a contact Ca thereof is closed, and power is supplied to the load M such as a motor. When any one of relays Rya and Ryb is energized and any one of the contacts Ryaa and Ryba is closed, power is supplied to the energizing coil C of the contactor, on the other hand, when both of the contacts Ryaa and Ryba are opened, power supply to the energizing coil C is stopped.

Hereinafter, the details of the operation by the ON/OFF control operation from the control panel 3 in FIG. 1 will be described with reference to FIG. 4.

Step ST11: Turn on the load ON/OFF operation button B (corresponds to each load M such as a motor) on the control panel 3 (control command input).

Step ST12: Input ON command information into the transmission slave station 3a1.

Step ST13: Transmit the ON command information to the transmission master station 3B from the transmission slave station 3a1 through the transmission line 4b (the transmission master station 3B cyclically collects information from all the transmission slave stations).

Step ST14: The transmission master station 3B transmits the ON command information to the transmission port **b** in the transmission slave station 2a (multi-motor controller) through the transmission line 4b.

Step ST15: The transmission slave station 2a receives the ON command information through the transmission port **b,** and writes it into the control command memory b therein.

Step ST16: The transmission slave station 2a has a PLC (programmable logic control) function therein, and each information in the control command memory is allocated as an internal device of the PLC.

For example, an X20b device is turned on by the ON command. Note that, with respect to the X20b device, in the bit information in the programmable logic, in this case, allocation as input bit information via a transmission is performed. For example, when the programmable logic is programmed in such a way that, when the X20b device is turned on, the load ON control command is output and the load is turned on, such an operation is performed.

Further, with respect to the internal device, the entire bit information in the programmable logic is referred to, and allocation in the internal memory in the transmission slave stations and the controller is performed.

Step ST17: Since the operation logic of the internal PLC in the transmission slave station 2a is programmable, free allocation of an AND.OR condition is possible; for example, allocation is performed in such a way that an output device is turned on by the OR information in the control command memory a and the control command memory **b.**

Step ST18: When the output device is turned on, the relay Rya (see FIG. 3) assigned to the output device operates to turn on the relay contact Ryaa, then the contact signal turns on a contactor C (the coil of the contactor C is energized) to turn on a contactor contact Ca, thereby, the motor (load) M connected to the main circuit is driven.

Note that, with respect to the output device, in the bit information in the programmable logic, in this case, allocation as output bit information to the transmission slave station and the controller is performed. When the output device is turned on, the relay contacts for the transmission slave station and the controller are turned on together.

Step ST19: When the contactor is turned on, the contactor ON information is input into the input port in the transmission slave station 2a. The input information is allocated as the internal device of the PLC.

For example, an X1 device is turned on by the ON command. Note that, with respect to the X1 device, in the bit information in the programmable logic, in this case, allocation as input bit information to the transmission slave station and the controller is performed. For example, when the programmable logic is programmed in such a way that, when the X1 device is turned on, the load state is turned on, and the load ON lamp lights up, such an operation is performed.

Step ST110: In the operation logic of the internal PLC in the transmission slave station 2a, a logic is made in such a way that, for example, when the load is on, an ON indication device (e.g., M200) is turned on, and, turning on the ON indication device causes the ON indicator lamp of the transmission slave station 2a to light up, thus the load state can be confirmed from the outside.

Note that, with respect to the ON indication device, in the bit information in the programmable logic, in this case, allocation as special device information of the transmission slave station and the controller is performed, and when the ON indication device is turned on, the ON indicator lamp for the transmission slave station and the controller lights up.

Step ST111: Further, the operation logic of the internal PLC in the transmission slave station 2a is constructed to, when the load is ON, cause the load ON information device (e.g., Y20a, Y20b) to turn on.

Note that, with respect to the load ON information device, in the bit information in the programmable logic, in this case, allocation as output bit information via transmission is performed.

Step ST112: The load ON information device Y20a corresponds to the load information memory **a,** and the Y20b corresponds to the load information memory **b;** the information is, for the load information memory **a,** transmitted to the transmission master station 1A via the transmission line 4a from the transmission port **a,** and for the load information memory b, transmitted to the transmission master station 1B from the transmission port **b.**

Step ST113: In the transmission master station 1A in the monitor and control room 1, when the load ON information is received, and the information is transferred to the control system CS, the fact that the load is turned to an ON state can be confirmed on the control system CS side.

Note that, in regards to the control system CS, the control system is generally called a DCS (Distributed control system) and is the control unit of the monitor and control system.

Step ST114: On the other hand, the transmission master station 3B receives the load ON information of the transmission slave station 2a, and transmits the load ON information to the transmission slave station 3a1 in the control panel 3 corresponding thereto through the transmission line 4b.

Step ST115: When the transmission slave station 3a1 receives the load ON information, the transmission slave station 3a1 outputs the ON state indication output and causes the ON indicator lamp of the display device D to light up.

Note that the transmission master station 3B may be placed in the electric room 2.

### Second Embodiment

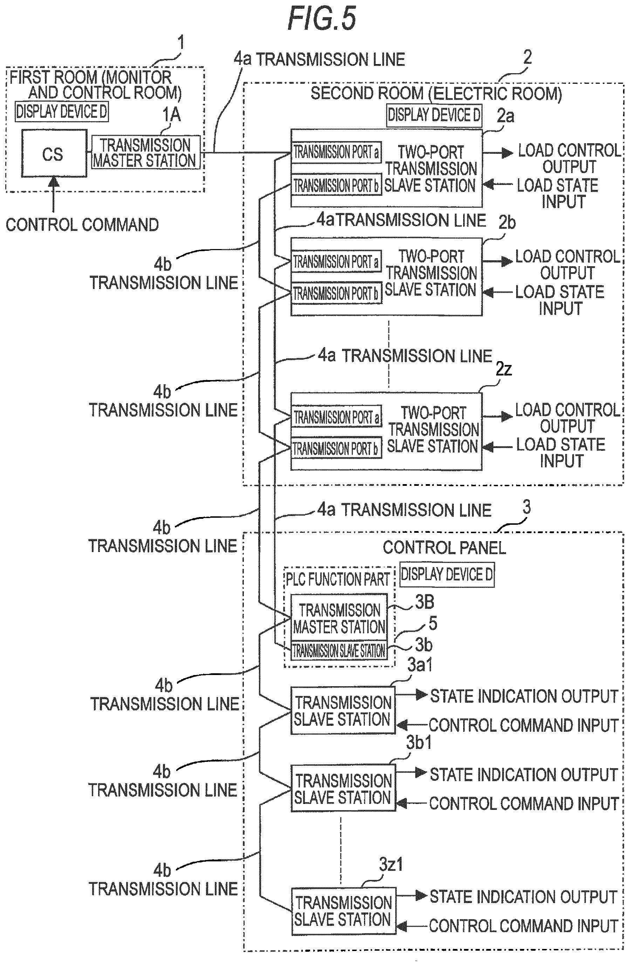

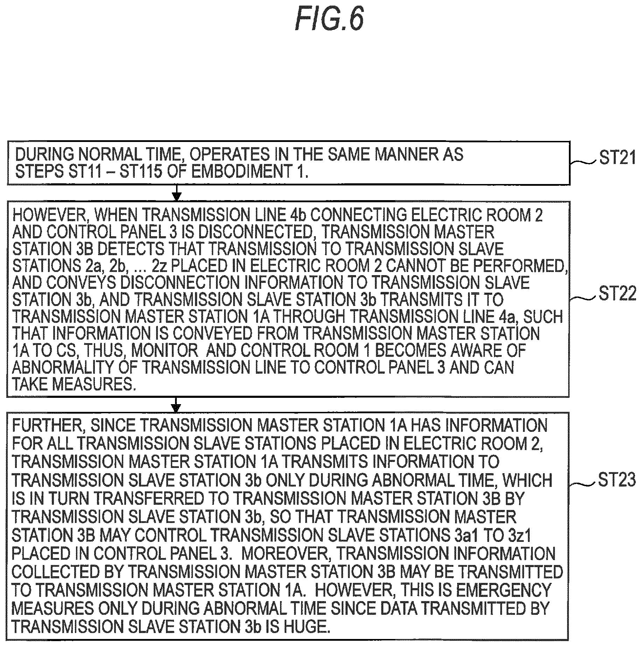

Hereinafter, a second embodiment of the present invention will be described with reference to Figs. 5 and 6. FIG. 5 is a diagram illustrating another example of a system configuration of the entire monitor and control system and FIG. 6 is an operation explanatory diagram illustrating, with a flow chart, a load control operation from the control panel in FIG. 5.

The second embodiment illustrates a configuration in which if abnormality occurs in the transmission line 4b, information in the transmission slave stations 3a1 to 3z1 is transmitted to the monitor and control room 1 via the transmission line 4a to allow for control over the load of the electric room 2 via the transmission master station 1A, and in which, in addition to the first embodiment, a transmission slave station 3b connected to the transmission port a in the transmission slave stations 3a to 3z in the electric room 2 is additionally placed in the control room 3 in the field.

During a normal time, the second embodiment operates in the same manner as steps ST11 - ST115 of first embodiment (Step ST21).

However, when the transmission line 4b connecting the electric room 2 and the control panel 3 is disconnected, the transmission master station 3B detects that the transmission to the transmission slave stations 2a, 2b, ... 2z placed in the electric room 2 cannot be performed, and conveys the disconnection information to the transmission slave station 3b, and the transmission slave station 3b transmits it to the transmission master station 1A through the transmission line 4a, such that the information is conveyed from the transmission master station 1A to the control system CS, thus, the monitor and control room 1 becomes aware of the abnormality in the transmission line to the control panel 3 and can take measures (Step ST22).

Further, since the transmission master station 1A has information for all transmission slave stations 2a, 2b, ... 2z placed in the electric room 2, the transmission master station 1A transmits the information to the transmission slave station 3b only during an abnormal time, which is in turn transferred to the transmission master station 3B by the transmission slave station 3b, so that the transmission master station 3B may control the transmission slave stations 3a1 to 3z1 placed in the control panel 3.

Moreover, the transmission information collected by the transmission master station 3B may be transmitted to the transmission master station 1A. However, this is emergency measures only during an abnormal time since data transmitted by the transmission slave station 3b is huge (Step ST23).

### Third Embodiment

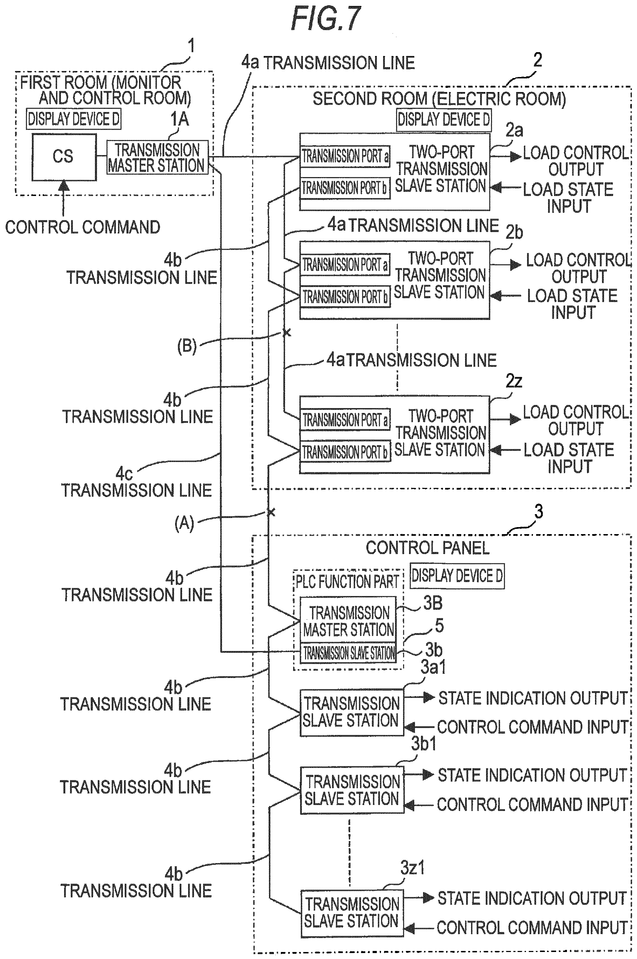

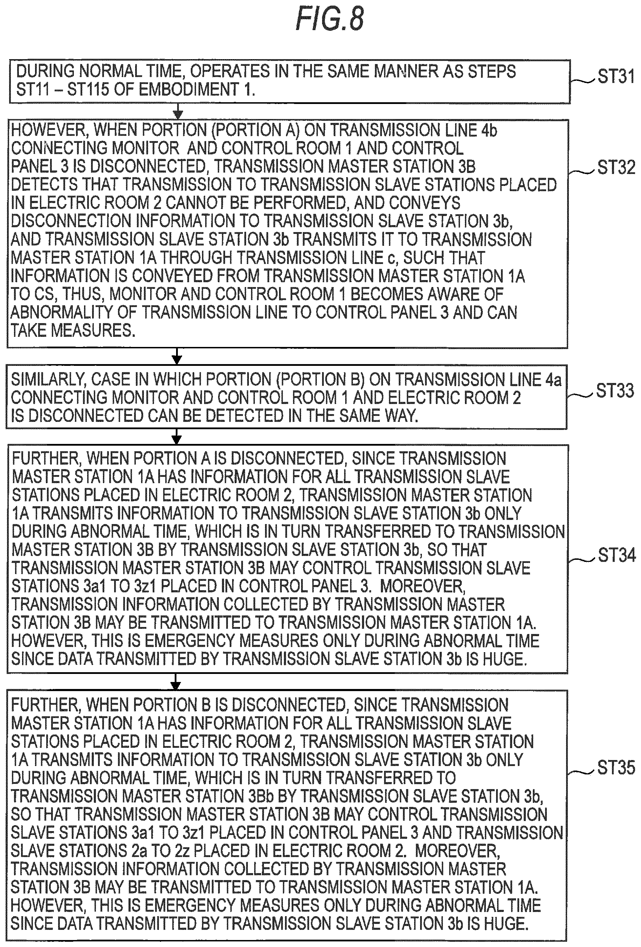

Hereinafter, a third embodiment of the present invention will be described with reference to FIGS. 7 and 8. FIG. 7 is a diagram illustrating yet another example of a system configuration of the entire monitor and control system, and FIG. 8 is an operation explanatory diagram illustrating, with a flow chart, a load control operation from the control panel in FIG. 7.

The third embodiment has a configuration in which a transmission line 4c is additionally provided, and has the same effect as that of the second embodiment.

During a normal time, the third embodiment operates in the same manner as steps ST11 - ST115 of first embodiment (Step ST31).

However, when a portion (portion A) on the transmission line 4b connecting the electric room 2 and the control panel 3 is disconnected, the transmission master station 3B detects that the transmission to the transmission slave stations placed in the electric room 2 cannot be performed, and conveys the disconnection information to the transmission slave station 3b, and the transmission slave station 3b transmits it to the transmission master station 1A through the transmission line c, such that the information is conveyed from the transmission master station 1A to the control system CS, thus, the monitor and control room 1 becomes aware of the abnormality in the transmission line to the control panel 3 and can take measures (Step ST32).

Similarly, the case in which a portion (portion B) on the transmission line 4a connecting the monitor and control room 1 and the electric room 2 is disconnected can be detected in the same way (Step ST33).

Further, when the portion A is disconnected, since the transmission master station 1A has information for all the transmission slave stations 2a, 2b, ... 2z placed in the electric room 2, the transmission master station 1A transmits the information to the transmission slave station 3b only during an abnormal time, which is in turn transferred to the transmission master station 3B by the transmission slave station 3b, so that the transmission master station 3B may control the transmission slave stations 3a1 to 3z1 placed in the control panel 3.

Moreover, the transmission information collected by the transmission master station 3B may be transmitted to the transmission master station 1A. However, this is emergency measures only during an abnormal time since data transmitted by the transmission slave station 3b is huge (Step ST34).

Further, when the portion B is disconnected, since the transmission master station 1A has information for all the transmission slave stations 2a, 2b, ... 2z placed in the electric room 2, the transmission master station 1A transmits the information to the transmission slave station 3b only during an abnormal time, which is in turn transferred to the transmission master station 3Bb by the transmission slave station 3b, so that the transmission master station 3B may control the transmission slave stations 3a1 to 3z1 placed in the control panel 3 and the transmission slave stations 2a to 2z placed in the electric room 2.

Moreover, the transmission information collected by the transmission master station 3B may be transmitted to the transmission master station 1A. However, this is emergency measures only during an abnormal time since data transmitted by the transmission slave station 3b is huge (Step ST35).

### Fourth Embodiment

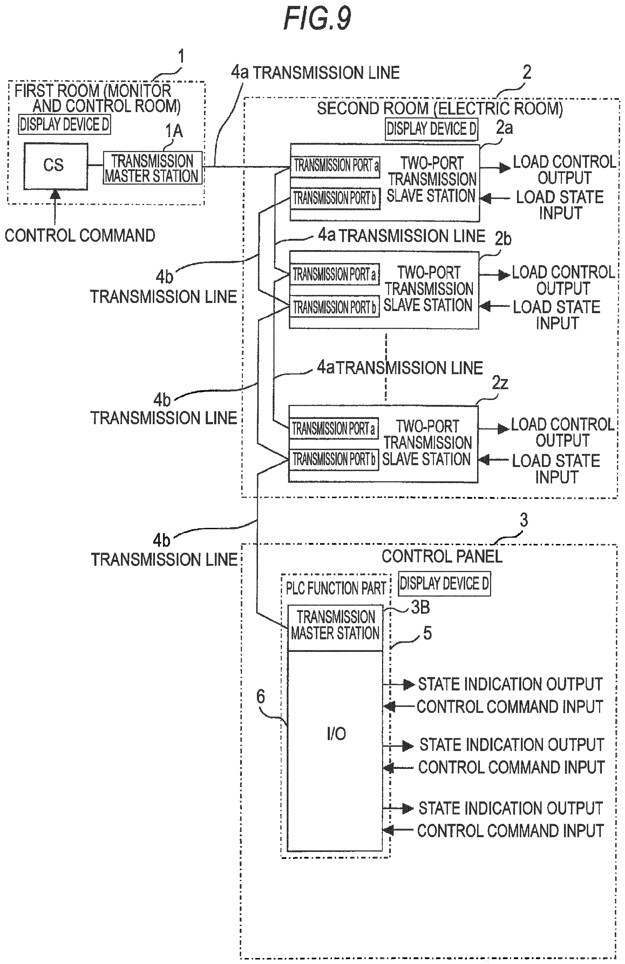

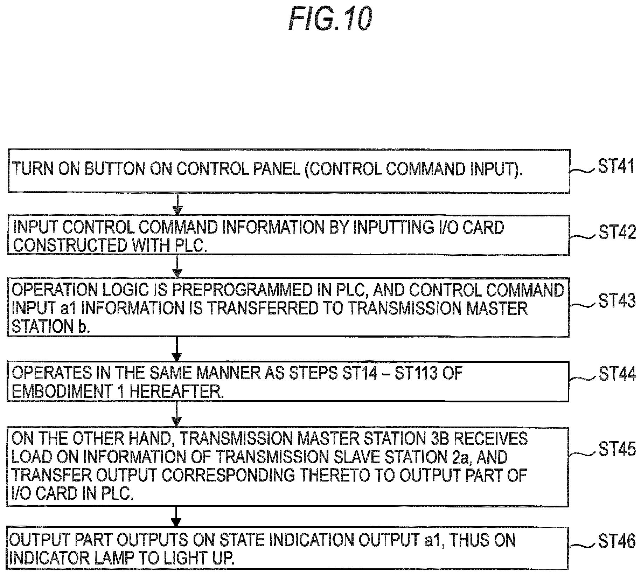

Hereinafter, a fourth embodiment of the present invention will be described with reference to FIGS. 9 and 10. FIG. 9 is a diagram illustrating yet another example of a system configuration of the entire monitor and control system, and FIG. 10 is an operation explanatory diagram illustrating, with a flow chart, a load control operation from the control panel in FIG. 9.

The fourth embodiment represents a case in which the input/output of the transmission slave stations 3a1 to 3z1 in the control panel 3 in the first embodiment is replaced with an I/O unit 6 in a programmable logic control (PLC) 5.

Hereinafter, the details of the operation by the ON/OFF control operation from the control panel 3 in FIG. 9 will be described with reference to FIG. 10.

Step ST41: Turn on the load ON/OFF operation button (corresponds to each load M) on the control panel 3 (control command input).

Step ST42: Input control command information by inputting the I/O unit card 6 constructed in the programmable logic control (PLC) 5.

Step ST43: An operation logic is preprogrammed in the programmable logic control (PLC) 5, and control command input (which is the same as the control command input of the transmission slave stations 3a1 to 3z1 in the first embodiment) information is transferred to the transmission master station 3B.

Step ST44: Operate in the same manner as steps ST14 - ST113 of the first embodiment hereafter.

Step ST45: On the other hand, the transmission master station 3B receives the load ON information of the transmission slave station 2a, and transmits the output corresponding thereto to the output part of the I/O unit card 6 in the programmable logic control (PLC) 5.

The output part of the I/O unit card 6 outputs the load ON state indication output (which is the same as the load ON state indication output of the transmission slave stations 3a1 to 3z1 in the first embodiment), thus the ON indicator lamp on the display device D lights up.

### Fifth Embodiment

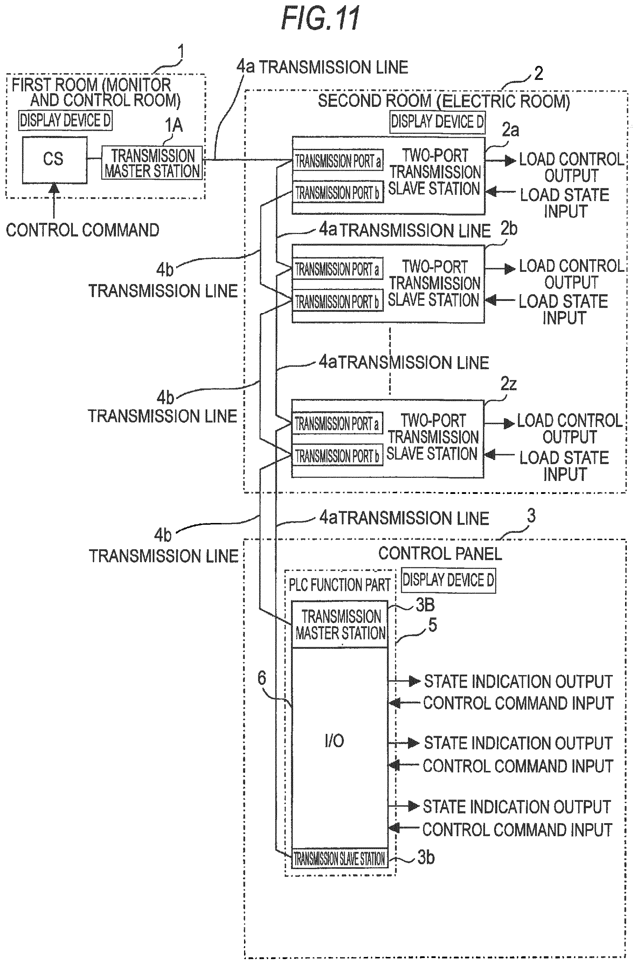

As illustrated in FIG. 11, a fifth embodiment is an example of a variation in which a transmission slave station 3b in the second embodiment is added to the fourth embodiment, and has both of the function of the fourth embodiment and the function of the second embodiment.

### Sixth Embodiment

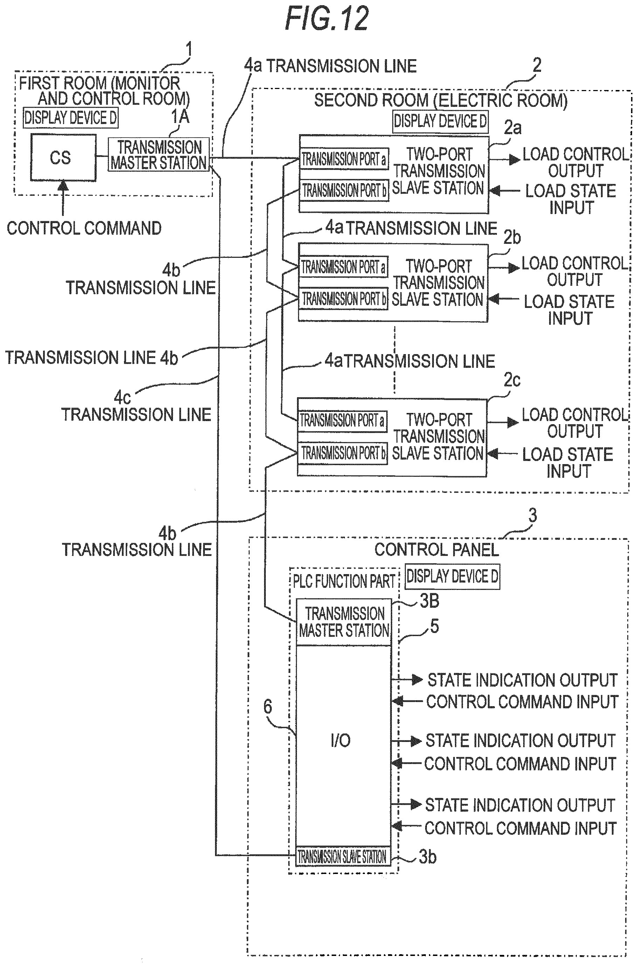

As illustrated in FIG. 12, a sixth embodiment is an example of a variation in which a transmission line c in the third embodiment is added to the fifth embodiment, and has both of the function of the fifth embodiment and the function of the third embodiment.

Note that the present invention may be modified or omitted from each embodiment as appropriate within the scope of the invention.

Note that, in each drawing, the same symbols denote the same or equivalent portions.

### List of Reference Signs

1 First room (monitor and control room)
1A First transmission master station
2 Second room (electric room)
2a, 2b, ... 2z First transmission slave station
3 Control panel
3B Second transmission master station
3a1, 3b1, ... 3z1 Second transmission slave station
3b Third transmission slave station
4a-4c Transmission line
5 Programmable control (PLC) function part
6 I/O unit card
M load

## Claims

1. A monitor and control system, which is adapted to monitor a state of a load (M) by collecting state information on the load by a first transmission master station (1A) provided in a first room (1), a first transmission slave station (2a, 2b, • • • 2z) provided in a second room (2) and a second transmission slave station (3al, 3b1, • • • 3z1) provided in a control panel (3) provided in the vicinity of the load (M) to be controlled and monitored, and said monitor and control system, being adapted to control the load (M) by the first transmission master station (1A) through the first transmission slave station (2a, 2b, • • • 2z), and to controls the load (M) by the control panel (3) through the first transmission slave station (2a, 2b, • • • 2z) via the second transmission slave station (3al, 3b1, • • • 3z1), and
**characterized by** comprising a second transmission master station (3B) in the control panel (3) or the second room (2), wherein the first transmission master station (1A) and the second transmission master station (3B) are adapted to independently issue a control command to the first transmission slave station (2a, 2b, • • • 2z) in the second room (2) to control the load (M), and the first transmission master station (1A) and the second transmission master station (3B) collect state monitoring information on the load (M),
wherein a third transmission slave station (3b) is provided in the control panel (3), and the second transmission master station (3B) is adapted to transmit, to the first transmission master station (1A) through the third transmission slave station (3b), the fact that transmission from the control panel (3) to the first transmission slave station (2a, 2b, ... 2z) in the second room (2) becomes disabled.

2. The monitor and control system according to claim 1,
wherein the first transmission master station (1A) in the first room (1) and the second transmission master station (3B) in the control panel (3) or the second room (2) are adapted to issue a control command to a first transmission slave station (2a, 2b, ...2z) in the second room (2) and collect load state monitoring information on a load through different transmission lines.

3. The monitor and control system according to claim 2,
wherein the first transmission slave station (2a, 2b, ...2z) comprises at least two transmission ports (a, b), one connecting a transmission port (a) in the first transmission slave station (2a, 2b, ...2z) and the first transmission master station (1A), and another connecting another transmission port (b) in the first transmission slave station (2a, 2b, ...2z) and the second transmission master station (3B).

4. The monitor and control system according to any one of claims 1 to3, wherein the second transmission master station (3B) is adapted to transmit the fact that transmission to the first transmission slave station (2a, 2b, ...2z) in the second room (2) becomes disabled to the first transmission master station (1A) from the third transmission slave station (3b) through a transmission line different from the transmission line through which the first transmission master station (1A) in the first room (1) and the second transmission master station (3B) in the control panel (3) or the second room (2) is adapted to issue a control command to the first transmission slave station (2a, 2b, ...2z) in the second room (2).

5. The monitor and control system according to any one of claims 1 to 4, wherein the second transmission slave station (3a1, 3b1, ...3z1) in the control panel (3) is an I/O unit (6) in a programmable logic control (5).

## Patentansprüche

1. Überwachungs- und Steuerungssystem, das dazu ausgebildet ist, den Zustand einer Last (M) zu überwachen, und zwar durch das Sammeln von Zustandsinformationen über die Last durch eine erste Übertragungs-Master-Station (1A), die in einem ersten Raum (1) angeordnet ist, eine erste Übertragungs-Slave-Station (2a, 2b, ...2z), die in einem zweiten Raum (2) angeordnet ist, und eine zweite Übertragungs-Slave-Station (3a1, 3b1, ...3z1), die in einer Schalttafel (3) angeordnet ist, die in der Nähe der zu steuernden und zu überwachenden Last (M) angeordnet ist, und wobei das Überwachungs- und Steuerungssystem dazu ausgebildet ist, die Last (M) mittels der ersten Übertragungs-Master-Station (1A) durch die erste Übertragungs-Slave-Station (2a, 2b, ...2z) zu steuern, und die Last (M) mittels der Schalttafel (3) durch die erste Übertragungs-Slave-Station (2a, 2b, ...2z) über die zweite Übertragungs-Slave-Station (3a1, 3b1, ...3z1) zu steuern, und
wobei das Überwachungs- und Steuerungssystem **dadurch gekennzeichnet ist, dass** es eine zweite Übertragungs-Master-Station (3B) in der Schalttafel (3) oder in dem zweiten Raum (2) aufweist, wobei die erste Übertragungs-Master-Station (1A) und die zweite Übertragungs-Master-Station (3B) dazu ausgebildet sind, unabhängig voneinander einen Steuerbefehl an die erste Übertragungs-Slave-Station (2a, 2b, ...2z) in dem zweiten Raum (2) auszugeben, um die Last (M) zu steuern, und wobei die erste Übertragungs-Master-Station (1A) und die zweite Übertragungs-Master-Station (3B) Zustandsüberwachungs-Informationen der Last (M) sammeln,
wobei eine dritte Übertragungs-Slave-Station (3b) in der Schalttafel (3) angeordnet ist, und die zweite Übertragungs-Master-Station (3B) dazu ausgebildet ist, an die erste Übertragungs-Master-Station (1A) durch die dritte Übertragungs-Slave-Station (3b) die Tatsache zu übertragen, dass die Übertragung von der zweiten Übertragungs-Slave-Station (3a1,°3b1,...3z1) in der Schalttafel (3) an die erste Übertragungs-Slave-Station (2a, 2b, ...2z) in dem zweiten Raum (2) deaktiviert wird.

2. Überwachungs- und Steuerungssystem nach Anspruch 1,
wobei die erste Übertragungs-Master-Station (1A) in dem ersten Raum (1) und die zweite Übertragungs-Master-Station (3B) in der Schalttafel (3) oder in dem zweiten Raum (2) dazu ausgebildet sind, einen Steuerbefehl an eine erste Übertragungs-Slave-Station (2a, 2b, ...2z) in dem zweiten Raum (2) auszugeben und Lastzustands-Überwachungsinformationen über eine Last über verschiedene Übertragungsleitungen zu sammeln.

3. Überwachungs- und Steuerungssystem nach Anspruch 2,
wobei die erste Übertragungs-Slave-Station (2a, 2b, ...2z) mindestens zwei Übertragungsanschlüsse (a, b) aufweist, von denen der eine den einen Übertragungsanschluss (a) in der ersten Übertragungs-Slave-Station (2a,°2b, ...2z) und die erste Übertragungs-Master-Station (1A) verbindet, und der andere den anderen Übertragungsanschluss (b) in der ersten Übertragungs-Slave-Station (2a, 2b, ...2z) und die zweite Übertragungs-Master-Station (3B) verbindet.

4. Überwachungs- und Steuerungssystem nach einem der Ansprüche 1 bis 3,
wobei die zweite Übertragungs-Master-Station (3B) dazu ausgebildet ist, die Tatsache zu übertragen, dass die Übertragung an die erste Übertragungs-Slave-Station (2a, 2b, ...2z) in dem zweiten Raum (2) deaktiviert wird, und zwar an die erste Übertragungs-Master-Station (1A) von der dritten Übertragungs-Slave-Station (3b) über eine Übertragungsleitung, die sich von der Übertragungsleitung unterscheidet, durch die die erste Übertragungs-Master-Station (1A) in dem ersten Raum (1) und die zweite Übertragungs-Master-Station (3B) in der Schalttafel (3) oder in dem zweiten Raum (2) dazu ausgebildet sind, einen Steuerbefehl an die erste Übertragungs-Slave-Station (2a, 2b, ...2z) in dem zweiten Raum (2) auszugeben.

5. Überwachungs- und Steuerungssystem nach einem der Ansprüche 1 bis 4,
wobei die zweite Übertragungs-Slave-Station (3a1, 3b1, ...3z1) in der Schalttafel (3) eine Eingabe/Ausgabe-Einheit oder (I/O)-Einheit (6) in einer programmierbaren Logiksteuerung (5) ist.

## Revendications

1. Système de surveillance et de commande, qui est adapté à surveiller un état d'une charge (M) en collectant des informations d'état sur la charge par une première station maîtresse d'émission (1A) prévue dans une première pièce (1), une première station esclave d'émission (2a, 2b, ...2z) prévue dans une deuxième pièce (2) et une deuxième station esclave d'émission (3a1, 3b1,...3z1) prévue dans un panneau de commande (3) prévu à proximité de la charge (M) à commander et à surveiller, et ledit système de surveillance et de commande étant adapté à commander la charge (M) par la première station maîtresse d'émission (1A) à travers la première station esclave d'émission (2a, 2b, ....2z) et à commander la charge (M) par le panneau de commande (3) à travers la première station esclave d'émission (2a, 2b, ...2z) via la deuxième station esclave d'émission (3a1, 3b1, ...3z1) et **caractérisé en ce qu'**il comprend une deuxième station maîtresse d'émission (3B) dans le panneau de commande (3) ou la deuxième pièce (2), dans lequel la première station maîtresse d'émission (1A) et la deuxième station maîtresse d'émission (3B) sont adaptées à émettre indépendamment une instruction de commande à la première station esclave d'émission (2a, 2b, ...2z) dans la deuxième pièce (2) pour commander la charge (M) et la première station maîtresse d'émission (1A) et la deuxième station maîtresse d'émission (3B) collectent des informations de surveillance d'état sur la charge (M),
dans lequel une troisième station esclave d'émission (3b) est prévue dans le panneau de commande (3) et la deuxième station maîtresse d'émission (3B) est adaptée à transmettre, à la première station maîtresse d'émission (1A), à travers la troisième station esclave d'émission (3b), le fait que la transmission du panneau de commande (3) à la première station esclave d'émission (2a, 2b, ...2z) dans la deuxième pièce (2) est désactivée.

2. Système de surveillance et de commande selon la revendication 1, dans lequel la première station maîtresse d'émission (1A) dans la première pièce (1) et la deuxième station maîtresse d'émission (3B) dans le panneau de commande (3) ou la deuxième pièce (2) sont adaptées à émettre une instruction de commande à une première station esclave d'émission (2a, 2b, ...2z) dans la deuxième pièce (2) et collecter des informations de surveillance d'état sur une charge à travers des lignes de transmission différentes.

3. Système de surveillance et de commande selon la revendication 2, dans lequel la première station esclave d'émission (2a, 2b, ....2z) comprend au moins deux ports d'émission (a, b), l'un reliant un port d'émission (a) dans la première station esclave d'émission (2a, 2b,...2z) et la première station maîtresse d'émission (1A) et l'autre reliant un autre port d'émission (b) dans la première station esclave d'émission (2a, 2b, ...2z) et la deuxième station maîtresse d'émission (3B).

4. Système de surveillance et de commande selon l'une quelconque des revendications 1 à 3,
dans lequel la deuxième station maîtresse d'émission (3B) est adaptée à émettre le fait que l'émission vers la première station esclave d'émission (2a, 2b, ....2z) dans la deuxième pièce (2) est désactivée à la première station maîtresse d'émission (1A) à partir de la troisième station esclave d'émission (3b) à travers une ligne de transmission différente de la ligne de transmission par laquelle la première station maîtresse d'émission (1A) dans la première pièce (1) et la deuxième station maîtresse d'émission (3B) dans le panneau de commande (3) ou la deuxième pièce (2) sont adaptées à émettre une instruction de commande à la première station esclave d'émission (2a, 2b, ...2z) dans la deuxième pièce (2).

5. Système de surveillance et de commande selon l'une quelconque des revendications 1 à 4,
dans lequel la deuxième station esclave d'émission (3a1, 3b1, ...3z1) dans le panneau de commande (3) est une unité E/S (6) dans une commande logique programmable (5).
